# EUROPEAN PATENT APPLICATION

(11) **EP 4 625 301 A1**
(43) Date of publication of application: **01.10.2025**
(21) Application number: 25166323.3
(22) Date of filing: 26.03.2025
(51) Int. Cl.: G06Q 40/04

(54) **AN IMPROVED IT INFRASTRUCTURE FOR ONLINE TRADING**

(30) Priority: 26.03.2024 IT 202400006733
(71) Applicant: Onghai, Michael, Phoenix, Arizona 85042 (US)
(72) Inventor: BERNARDI, Daniele, Sliema (MT)
(74) Representative: Braidotti, Andrea

(57) **Abstract**

IT infrastructure (2) for online trading of transferable securities, preferably crypto-assets and/or other transferable securities, characterized by comprising:
- at least one device (3) managed by a corresponding user (30),
- an online intermediation platform (4),
- a unit (5) supplying at least one automatic trading robot (6),
and by comprising:
- first means of communication (7) between the online intermediation platform (4) and the unit (5), to thus allow data communication between the platform (4) and the unit (5) in a direct way,
- second means of communication (8) of the device (3) with the online intermediation platform (4), to thus allow the user (30) of the device (3) to access and/or interface with the online intermediation platform (4).
and by the fact that said online intermediation platform (4) is configured to communicate directly to the unit (5) data and/or interface programs (10) so that said unit (5) supplies a robot (6) capable of carrying out automated trading operations through said platform (4) and/or by interfacing with said platform (4).

## Description

### TECHNICAL FIELD

The present invention relates to an improved IT infrastructure for online trading of transferable securities, preferably of crypto-assets and/or other transferable securities.

The present invention also relates to an improved method for online trading of transferable securities, preferably of crypto-assets and/or other transferable securities.

### STATE OF THE ART

In the field of cryptocurrency, the so called "*exchanges"* are known, which are online platforms configured to allow users to buy, sell and exchange cryptocurrencies. In particular, the exchanges essentially operate as intermediaries to which the user entrusts the cryptocurrencies in order to carry out buying and selling operations. Exchanges charge a commission for each trade made by each user.

In order to operate on exchange platforms and carry out cryptocurrency trading transactions through these platforms, users must first carry out a process (also called "*onboarding*") of registration and identity verification, also for anti-money laundering purposes.

The onboarding process is particularly long and laborious. In particular, this process begins by creating an account on the exchange platform. More specifically, for this purpose, users must provide personal information, such as name, e-mail address, telephone number and date of birth. Also, users must create a secure password for the account. Once an account has been created, users must complete identity verification by providing additional personal information, such as their ID number and a copy of their ID. Sometimes, the platform also requires proof of residency, such as a utility bill. Once identity verification has been completed, and the legally required anti-money laundering checks have also been carried out, users can deposit funds on the exchange platform and this can be done via a wide range of payment methods, including bank transfers, credit and cryptocurrencies. Once the funds have been deposited, users can then start using the exchange platform to buy, sell or trade cryptocurrencies. Basically, once the onboarding process has been completed, users can thus take advantage of the features of the exchange platform to buy, sell and exchange cryptocurrencies.

Exchange platforms usually offer an intuitive and easy-to-use user interface, which allows users to perform these operations quickly and easily; furthermore, the operations carried out by users are recorded in each user's account.

Occasionally, users of exchange platforms operate according to an investment method called "dollar cost averaging" (also known as "DCA" or in Italian "capital accumulation plan" or "PAC") which consists in periodically and regularly investing a predefined amount.

In the field of cryptocurrencies, cryptocurrency robots are also known, also called cryptocurrency *bots* or *trading bots,* which are essentially software programs configured to automatically execute a trading strategy. In particular, bots are created and provided to users by specialized software houses and are based on trading algorithms - which can be more or less complex - to decide and carry out trading operations.

In order to be able to use cryptocurrency bots, the user must complete an additional registration process on the bot provider's platform, which is independent/separate and additional to the one carried out on the exchange platform. Typically, the signup process for a cryptocurrency bot requires you to create an account on the bot provider's platform by providing personal information, such as your name, email address, mobile phone number, and a password for the account. The platform also requires verification of the email address and also the mobile phone number, by sending a confirmation link to the user by email and/or an OTP code by SMS.

So, once the cryptocurrency bot account has been created, the users themselves then need to link the cryptocurrency bots to their account on the exchange platform.

Currently, in order to be able to install and then use cryptocurrency bots within an *exchange platform,* the user himself must first request the latter to provide the corresponding public and private API (Application Programming Interface) keys for connection and, once received, the user himself must then share the APIs of the exchange with the platform providing the bots. In fact, only after receiving the exchange's API, the bot is able to send trading commands directly within the exchange, thus allowing the user to be able to carry out automated trading within that exchange.

The aforementioned procedure, which is currently required in order to allow the user to carry out automated trading within an exchange, appears to be particularly laborious and complicated and, in particular, requires the user himself - who often does not have the time and/or o the right skills - to put the exchange in communication with the software house that creates and supplies the bots. In particular, this operation, generally performed by non-expert users, involves significant risks since it requires them to copy and paste the access keys to their account and enter them on the network, with all the consequent problems in terms of computer security.

### OBJECTS OF THE INVENTION

The object of the present invention is to propose an IT infrastructure for online trading and/or a method for online trading which overcomes, at least in part, the aforementioned drawbacks present in currently known solutions.

Another object of the invention is to propose an IT infrastructure for online trading that is simple, easy and intuitive to use.

Another object of the invention is to propose an IT infrastructure and/or a method for online trading which can be implemented simply, quickly and with low costs.

Another object of the invention is to propose an IT infrastructure and/or a method for online trading which reduce the operations required of the user.

Another object of the invention is to propose an IT infrastructure and/or a method for online trading which are highly automated.

Another object of the invention is to propose an IT infrastructure and/or a method for online trading which are ameliorative and/or alternative to the traditional ones.

Another object of the invention is to propose an IT infrastructure and/or a method for online trading with an alternative characterization, both in functional and implementation terms, with respect to the traditional ones.

Another object of the invention is to propose an IT infrastructure and/or a method for online trading which allow for a lower consumption of resources by the hardware devices involved and a lower use of the bandwidth occupied by the network.

Another object of the invention is to propose an IT infrastructure and/or a method for online trading which allow users' sensitive data to be acquired quickly and securely, reducing and/or avoiding user intervention.

Another object of the invention is to propose an IT infrastructure and/or a method for online trading in which the passage of data and/or information between the intermediation platform and the robot supplying unit is more secure.

Another object of the invention is to propose an IT infrastructure and/or a method for online trading which allow to simplify or eliminate the user's registration and onboarding procedure with the entity proposing the robot for automatic trading.

Another object of the invention is to propose an IT infrastructure and/or a method for online trading which is highly integrated.

### SUMMARY OF THE INVENTION

All these aims - both considered individually and in any combination thereof - and others which will result from the following description are achieved, according to the invention, with the IT infrastructure having the characteristics indicated in claim 1 and with the online trading method having the characteristics indicated in claim 9.

### DESCRIPTION OF THE FIGURES

The present invention is hereinafter further clarified in some of its preferred embodiments shown for purely exemplifying and non-limiting purposes with reference to the attached drawings in which:
- Figure 1: schematically shows the IT infrastructure according to the invention,
- Figure 2: schematically shows the IT infrastructure according to the invention in a different embodiment.

### DETAILED DESCRIPTION OF THE INVENTION AND OF SOME PREFERRED

### EMBODIMENTS

### INFRASTRUCTURE

As can be seen from the figures, the IT infrastructure according to the invention, indicated overall with the reference number 2, for the online trading of transferable securities, preferably of crypto-assets and/or other transferable securities, comprises:
- at least one device 3 managed by the user 30,
- an online intermediation platform 4,
- a unit 5 supplying at least one automatic trading robot 6.

Conveniently, the IT infrastructure 2 also comprises first means of communication 7 between the online intermediation platform 4 and the unit 5 which supplies an automatic trading robot, to thus allow data communication between the platform 4 and the unit 5 in directly and, in particular, without passing through the device 3 managed by the user 30.

Conveniently, the infrastructure 2 also comprises second means of communication 8 of the device 3 with the online intermediation platform 4, to thus allow the user 30 of the device 3 to access and/or interface with the online intermediation platform 4.

Conveniently, by acting through the device 3 which is in communication with the online intermediation platform 4, the user 30 creates an account 40 suitable for operating within the online intermediation platform 4. Conveniently, to create said account 40 enabled to operate within the platform 4, the user 30 can carry out an "onboarding" procedure. Preferably, the onboarding procedure comprises a registration step and a user 30 identity verification step. Preferably, the onboarding procedure can be of the traditional type.

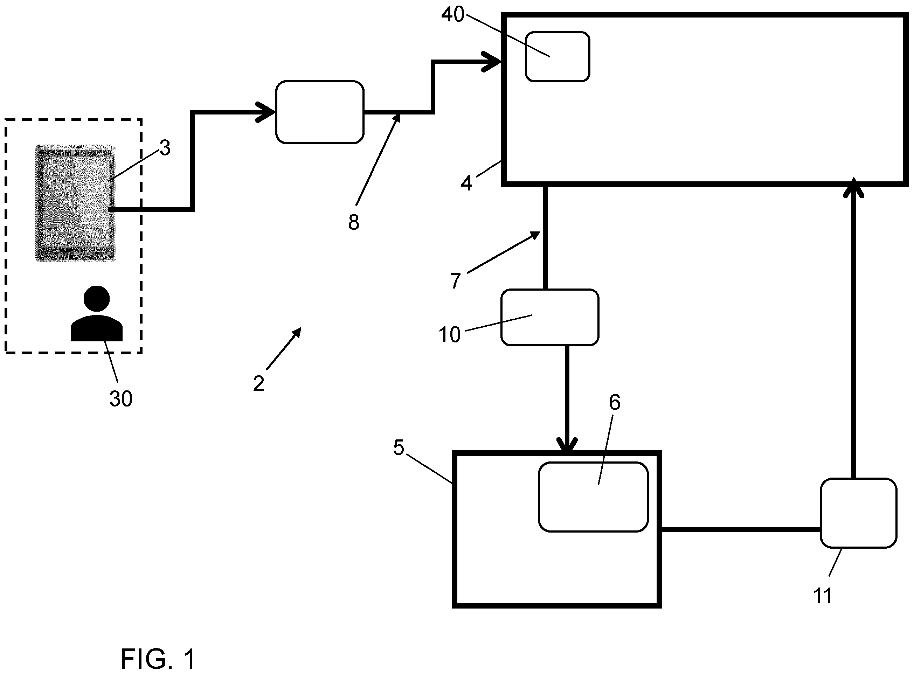

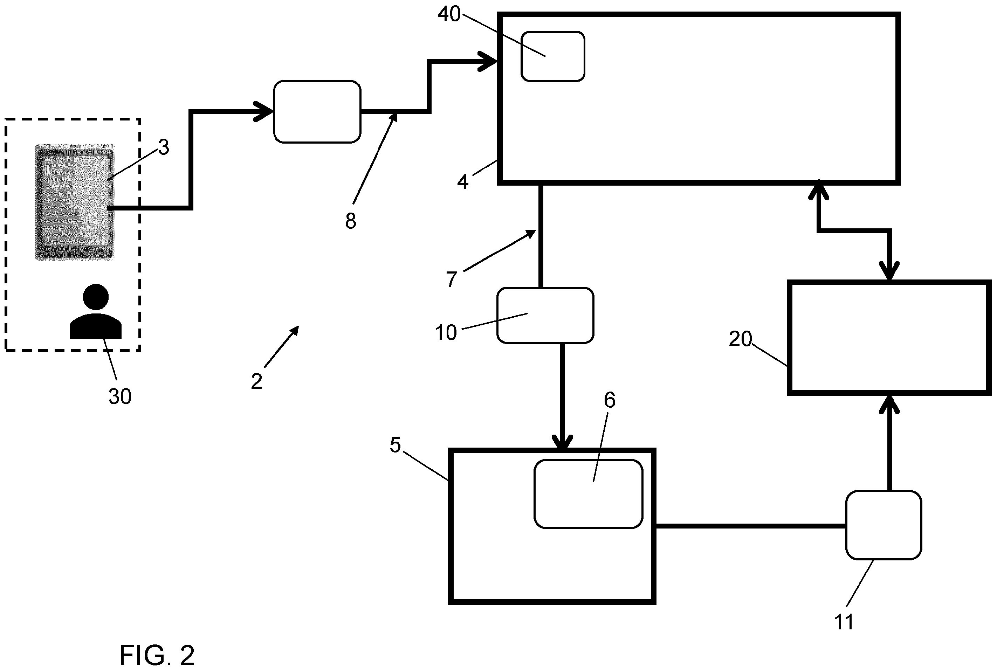

Preferably, the intermediation online platform 4 is configured to operate as a financial intermediary (see Fig. 1) and/or to interface/connect with a financial intermediary (see Fig. 2).

Conveniently, in a possible embodiment, the online intermediation platform 4 can be an exchange platform for transferable securities, preferably crypto-assets and/or other transferable securities

Preferably, the online intermediation platform 4 can be a crypto-asset exchange platform operating itself as an online broker and/or market maker (see Fig. 1).

Preferably, the online intermediation platform 4 can comprise and/or be managed by a bank and/or an institutional subject and/or an asset manager.

Conveniently, in a possible embodiment, the online intermediation platform 4 can be configured to interface with at least one external unit or platform 20 operating as an online broker and/or market maker (cf. Fig. 2).

Preferably, the unit 5 supplying the automatic trading robot 6 can comprise at least one further online platform.

Advantageously, the infrastructure according to the invention allows to connect directly an online intermediation platform 4 and a unit 5 which are distinct and separate from each other both at a software and a hardware level, and in particular it allows to connect directly the platform 4 with any unit 5 which can supply an automatic trading robot 6.

The online intermediation platform 4 is configured to communicate directly to the unit 5 interface data and/or programs 10 so that said unit 5 supplies a robot 6 capable of carrying out automated trading operations through said platform 4 and/or by interfacing with said platform 4.

Preferably, the online intermediation platform 4 comprises and/or is provided with an API (*application program interface)* to allow a software application (external to the platform) to interact with the platform itself.

Conveniently, the interface data and/or programs 10 include the APIs (*application program interfaces)* of the online intermediation platform 4.

Preferably, the interface data and/or programs 10 comprise at least one API key code which is an authentication code (public and/or private) which is required in order to be able to access the APIs of the online intermediation platform 4, in order to exchange and/or retrieve data through the APIs of the online intermediation platform 4 and/or in general in order to perform the actions available through the APIs of the online intermediation platform 4. In particular, the API key is a code that is required to limit access and/or use of the intermediation online platform APIs 4 only to authorized software applications. Conveniently, an API key code (public and/or private) is provided for each robot 6 generated by unit 5 and/or for each unit 5 and/or for each account 40 of platform 4, thus allowing the APIs of platform 4 to be able to identify the origin of the connection with the platform 4.

Conveniently, the interface data and/or programs 10 can comprise a unique identification code for each user and, preferably, for each account 40 created within the platform 4.

The unit 5 is configured to supply, on the basis of the interface data and/or programs 10 thus received directly from the online intermediation platform 4, at least one robot 6 capable of carrying out automatic trading operations.

Preferably, the robot 6 - which is supplied by the unit 5 and operates in/through said platform 4 - can be made available to users directly through the same platform 4.

Preferably, the automatic trading robot 6 is programmed by and/or at the unit 5. Conveniently, the robot 6 can be implemented at a further unit and/or by a different subject than the one who manages the unit 5.

Preferably, the automatic trading robot 6 is configured to generate and send signals 11 representative of trading operations to be carried out.

Conveniently, each automatic trading robot 6 can be linked to a user 30 and, preferably, is linked to the account 40 created by each user in the platform 4.

Preferably, each automatic trading robot 6 is associated with a unique identification code for each user and, preferably, a unique identification code is associated with each account 40 created within the platform 4. Advantageously, this allows the platform 4 to match the trading operations carried out by the robot 6 to the account 40 created within the platform 4.

Conveniently, the signals 11 representing trading operations to be carried out can be sent by the robot 6 to the online intermediation platform 4 (in particular in the case where the platform is an exchange operating as an online broker and/or market maker, see fig. 1) and/or can be sent to the external unit or platform 20 which operates as an online broker and/or market maker (see Fig. 2) and which then interfaces with the online intermediation platform 4.

More preferably, the automatic trading robot 6 is configured to generate and send signals 11 representative of trading operations to be carried out according to a "dollar cost averaging" (DCA) accumulation plan which has been subscribed by the user 30 by accessing the platform 4 via the device 3.

Preferably, the online intermediation platform 4 is configured to propose and implement an investment method according to a "Dollar Cost Averaging" (DCA) capital accumulation plan (in Italian also knows as "PAC") in which trading operations are carried out in an automated way by means of said automatic trading robot 6 which, advantageously, has been configured to operate in/through said platform 4 and/or to interface with said platform 4.

In particular, unlike traditional solutions in which for the investment method with the "Dollar Cost Averaging" (DCA) capital accumulation plan the trading operations are substantially decided and controlled by the user, who is thus exposed to market fluctuations which, being particularly high in the case of crypto-assets, can lead the user himself to make errors of evaluation and operation, in the solution according to the invention, the online intermediation platform 4 can also offer users an investment method with a "Dollar Cost Averaging" (DCA) capital accumulation plan in which the trading operations are carried out in an automated way by means of an automatic trading robot 6, and advantageously this is obtained without requiring the user himself to put the platform 4 in communication with the supplier of the robot 6.

Preferably, the trading operations carried out by each robot 6 connected to a user 30 are registered within the account 40 which each user 30 has created within the platform 4.

Advantageously, therefore, in the solution according to the invention, the online intermediation platform 4 interfaces directly, without requiring intervention by the user 30, with the unit 5 supplying the automatic trading robot 6.

Advantageously, the direct connection (i.e. not mediated/filtered by the user 30 who manages the device 3) between the online intermediation platform 4 and the unit 5 supplying the robot 6 allows data transmission and, in particular, the transmission of the APIs and /o of data connected to the API, in a leaner, faster and more secure way.

Advantageously, in this way the user 30 of the device 3 who interfaces with the online intermediation platform 4 has a ready and operational automated trading service available, thus avoiding the user 30 of the device 3 having to act as a link between the platform 4 and the further unit 5.

Preferably, the device 3 managed by the user 30 interfaces and communicates always and only with the online intermediation platform 4.

Advantageously, the unit 5 does not have access to the data of the platform 4 except for the ones it receives by means of the interface data and/or programs 10.

Preferably, in a possible embodiment, the online intermediation platform 4 may hide to the user 30 the credentials used to connect an account 40 of the user with a robot 6 of a unit 5, in such a way as to prevent any unintentional or imprudent communication of sensitive data of the account 40 by the user 30 - directly or indirectly through further platforms or units - to the unit 5.

Conveniently, in a possible embodiment not shown here, the unit 5 supplying the robot 6 can be incorporated - and preferably can be "embedded" - within the online intermediation platform 4.

### METHOD

The present invention also relates to a method, which is implemented by processors/computers, for the online trading of transferable securities, preferably crypto-assets and/or other transferable securities in which:
- an online intermediation platform 4 offers users an investment method according to a "dollar cost averaging" (DCA) capital accumulation plan,
- at least one user 30 subscribes, by means of a device 3, to a "dollar cost averaging" (DCA) capital accumulation plan proposed by said platform 4,
- said online intermediation platform 4 directly sends interface data and/or programs 10 to unit 5 supplying a robot 6 for automatic trading, in order to be able to carry out trading operations in/through said platform 4 and/or by interfacing with said platform 4,
- the unit 5 supplies, on the basis of the interface data and/or programs 10 thus received directly from the online intermediation platform 4, at least one robot 6 able to carry out automatic trading operations in/through said platform 4 and/or by interfacing with said platform 4 according to said "dollar cost averaging" (DCA) capital accumulation plan which has been subscribed by user 30.

Conveniently, in the method according to the invention the interface data and/or programs 10 (for example the API Keys and/or the secret Keys of and/or associated with the platform 4) are transmitted directly from the platform 4 to the unit 5 without requiring any intervention or intermediation by the user 30, and in particular without requiring any manual intervention by the user 30 on the device 3.

Conveniently, the method according to the invention can comprise an initial phase in which a user 30, acting through the device 3 which is in communication with the online intermediation platform 4, creates an account 40 suitable for operating within the online platform of intermediation 4. Preferably, to create said account 40 enabled to operate within the platform 4, the user 30 can carry out an "onboarding" procedure. Preferably, the onboarding procedure comprises a registration step and a user identity verification step 30. Preferably, the onboarding procedure can be of the traditional type and/or in accordance with the provisions of current legislation.

Preferably, in the method according to the invention the user 30 acts through the device 3, which is in communication with the online intermediation platform 4, to create an account 40 only within the online intermediation platform 4, as it is not thus required the user any specific and direct action in order to create an account and/or register on the unit 5.

Preferably, the interface data and/or programs 10, which are sent directly from the platform 4 to the unit 5, comprise the APIs (*application program interfaces)* of the online intermediation platform 4.

Preferably, the interface data and/or programs 10, which are sent directly from the platform 4 to the unit 5, comprise at least one API key code which is an authentication code (public and/or private) which is required in order to be able to access the APIs of the online intermediation platform 4, in order to exchange and/or retrieve data via the APIs of the online intermediation platform 4 and/or in general in order to perform the actions available via the APIs of the online intermediation platform 4.

Conveniently, the interface data and/or programs 10 can comprise a unique identification code for each user and, preferably, for each account 40 created within the platform 4.

Preferably, in the method according to the invention, the unique identification code of an account 40 is the only credential transmitted in the interface data and/or programs 10. Advantageously, therefore, the interface data and/or programs 10 do not include data of the user 30 or data of the account 40, except for market and/or trading and/or portfolio data.

Conveniently, in the method according to the invention, the automatic trading robot 6 thus provided by the unit 5 sends - to the online intermediation platform 4 acting as online broker and/or market maker and/or sends to the external unit or platform 20 which operates as an online broker and/or market maker - signals 11 representing trading operations to be carried out according to the "dollar cost averaging" (DCA) capital accumulation plan which has been subscribed by the user 30.

Preferably, in the method according to the invention, the unit 5 automatically associates to said at least one robot 6 an identification code which is different for each user 30. Preferably, in the method according to the invention, the unit 5 automatically associates to said at least a robot 6 an identification code which is different for each account 40 created in the platform 4 and, advantageously, this identification code can be created by the unit 5 or it can be contained within the data packet and/or interface programs 10 which is transferred directly from platform 4 to unit 5.

Preferably, in a possible embodiment of the method according to the invention, the user 30 is not required to register with the unit 5. More preferably, the unit 5 does not require any registration of a user 30 which interacts with the platform 4.

In essence, preferably, in the method according to the invention, it is the unit 5 that provides the robot 6 which automatically creates and associates an identification code for each user 30 and/or for each account 40 already created in the platform 4, thus avoiding all the user of having to carry out by himself further and dedicated registration procedures with the supplier of the robot 6 and/or in order to use the robot 6. Furthermore, in this way, advantageously, the user data 30 (and in particular personal data generally requested during registration, such as for example name, e-mail address, telephone number and date of birth) are neither uploaded to unit 5 nor are they transmitted to unit 5 and, therefore, for the latter the user 30 remains substantially anonymous, thus guaranteeing greater protection of privacy and also greater security of the data of user 30 since these are not transmitted outside the platform 4.

Advantageously, in the method according to the invention, the registration and/or verification and/or association of the data of the user 30 at the unit 5 for the purpose of configuring the robot 6 and/or for the purpose of allowing the of the robot 6 can be integrated, preferably can be embedded, in the platform 4.

Conveniently, in another possible embodiment, the user 30 can act by means of the device 3 to supply the data of the user 30 to the unit 5.

From what has been said it is clear that the infrastructure and method according to the invention are considerably advantageous with respect to known solutions.

The solution according to the invention is particularly advantageous as it allows to simplify or eliminate the user's registration and onboarding procedure at the unit offering the robot, in particular it avoids the user having to enter his data at the unit which proposes the robot and to carry out the corresponding actions or verifications requested, as well as prevents this unit from being configured to implement onboarding management procedures the verification procedures requested (for example by sending an email and/or with an OTP code sent via SMS).

The solution according to the invention is particularly advantageous since the registration and/or onboarding procedure required for the configuration of the automatic trading robot is integrated - and preferably is embedded - within the platform 4.

### ROBOT

The automatic trading robot 6, which is configured to carry out automatic trading operations through the platform 4 and/or by interfacing with the platform 4, is programmed so as to carry out trading operations according to at least two different predefined trading strategies.

Preferably, the robot 6 is programmed so as to carry out trading operations according to three predefined trading strategies which are different from each other.

Preferably, robot 6 is programmed to carry out trading operations based on a first predefined trading strategy, a second predefined trading strategy and a third predefined trading strategy.

Conveniently, said trading strategies can be configured to carry out the purchase and sale of at least two assets, preferably of two, three or four assets. Conveniently, said assets include at least one cryptocurrency and a fiat currency (for example the dollar) or a digital currency of the "stablecoin" type.

Preferably, the first default trading strategy is configured to purchase two or more assets so that they are balanced/constant within the portfolio. More preferably, the first default trading strategy is configured to carry out the simultaneous and balanced purchase of two or more assets. Preferably, the first default trading strategy is of the type called "constant-mix". Conveniently, the purchase of each asset can be made based on the performance of the same assets in the last period of time.

Preferably, the second predefined trading strategy is configured to check the differences (imbalances) between the assets and, if they exceed a certain threshold value (which is preferably suitably set), it carries out asset buying and selling operations in order to decrease these differences, to thus rebalance the investments in the various assets within the portfolio.

Preferably, the third default trading strategy is configured to trade portfolio assets based on market trends. In particular, trading operations can be carried out on the basis of data which are provided by quantitative models and which are representative of the current trend on the market. Preferably, the third default trading strategy is of the "trend following indicator" type.

Conveniently, the robot 6 can comprise three software modules (also called *engines),* each of which is programmed to generate, respectively on the basis of the first, second and third predefined strategies, signals 11 representative of trading operations to be carried out. Conveniently, the three software modules are configured to receive as input market data collected by said platform 4 and/or from another external source, and/or to receive as input processed data supplied as output by quantitative models. Preferably, the three software modules are configured to exchange data with each other. Conveniently, the robot 6 can comprise a single software program with the aforementioned three software modules or it can comprise three software programs, one for each software module, which are connected to each other so as to allow data exchange.

Conveniently, the robot 6 can be configured to execute the first software module - which is programmed to generate, on the basis of the first predefined trading strategy, signals 11 representative of trading operations to be carried out in/through the platform 4 and/or by interfacing with said platform 4 - every time a capital payment is made on the account 40 of user 30 in platform 4. Preferably, the first software module is executed in correspondence with the periodic capital payment which is made with the periodicity (e.g. weekly or monthly) associated with the "dollar cost averaging" (DCA) capital accumulation plan chosen/subscribed by the user 30.

Suitably, the robot 6 can be configured to execute the second software module - which is programmed to generate, on the basis of the second predefined trading strategy, signals 11 representative of trading operations to be carried out in/through the platform 4 and/or by interfacing with said platform 4 - each time a capital payment is made to account 40 of user 30 in platform 4 and/or with a pre-set frequency, preferably daily. Preferably, the second software module is executed in correspondence with the periodic capital payment which is carried out with the periodicity (for example weekly or monthly) associated with the a "dollar cost averaging" (DCA) capital accumulation plan chosen/subscribed by the user 30 and/or is executed at a pre-set frequency, preferably daily.

Conveniently, the robot 6 can be configured to execute the third software module - which is programmed to generate, on the basis of the third predefined trading strategy, signals 11 representative of trading operations to be carried out in/through the platform 4 and/or by interfacing with called platform 4 - with a pre-set frequency, preferably daily.

Preferably, the robot 6 is configured so that the third software module influences/conditions the trading strategy of the first software module.

Preferably, the robot 6 is configured in such a way that, on the basis of the market trend (in particular on the basis of data which are provided by quantitative models and which are representative of the current trend on the market), it enables or disables the first predefined strategy of trading. In particular, the robot 6 is configured in such a way that, on the basis of the market trend, it commands the purchase of two or more assets according to the first predefined trading strategy (which is preferably of the type called "constant-mix", to purchase thus the assets in a balanced way and/or in order to balance the portfolio), or commands the purchase of two or more assets according to percentages determined starting from the data relating to the market trend, or still commands the purchase of a single assets (for example only fiat currency/digital currency of the "stablecoin" type).

Advantageously, the robot 6 - which is configured as described above - allows the user 30 to obtain a greater income and to reduce/balance the risk of loss.

Robot 6 - which is configured as described above - increases the number of trading operations performed on platform 4 and this is particularly advantageous from an economic point of view for the operator of platform 4 since the latter earns a commission for each operation of trading carried out on the platform itself.

### TECHNICAL DETAILS OF THE INFRASTRUCTURE IMPLEMENTATION

Device 3 may be implemented by desktop computers, laptops, handheld computers (PDAs), smartphones, tablets, notebooks, netbooks, ultra-portable computers (UMPCs), car computers, and other similar devices. Conveniently, the device 3 comprises or consists of a processor. Preferably, the device 3 managed by the user 30 is of the portable type (for example a mobile phone, smartphone, tablet, etc.).

The platform 4 can comprise at least one processor, such as for example a real or virtual remote server and/or a cloud system. The platform 4 can be implemented according to various embodiments of digital computers, such as laptops, desktops, workstations, handheld computers (PDAs), servers, blade servers, mainframe computers, and other suitable computers.

The unit 5 can comprise at least one processor, such as for example a real or virtual remote server and/or a cloud system. The unit 5 can be implemented according to various embodiments of digital computers, such as laptops, desktops, workstations, handheld computers (PDAs), servers, blade servers, mainframe computers and other suitable computers.

Preferably, the first means of communication 7 and/or the second means of communication 8 can use the Internet network and/or cellular mobile telephony technology (with standards such as for example GSM, UMTS, GPRS, etc.) and/or use a connection via cable or by data transfer via mass storage devices (for example via USB drives, optical discs, memory cards, etc.).

Conveniently, the first means of communication 7 and the second means of communications 8 may comprise hardware and/or software components which simplify the exchange of data and may comprise "communication modules" or "network interfaces". Their implementation may vary on the basis of the specific system architecture. The first means 7 and/or the second means 8 of communication may, for instance, be implemented as a network interface module, which may consist of a wired connection (e.g., Wi-Fi, Bluetooth or phone connectivity as GSM, UMTS, GPRS). According to the design of the system, this may include driver software and stacks of protocols for the exchange of data (e.g., stack TCP/IP for communication based on the internet or specific APIs to connect to external services).

The software modules may be tangibly incorporated into a computer medium, which may be a computer-readable storage medium, such as the aforementioned memory or storage device.

Platform 4 can be implemented in a number of different forms. For example, it can be implemented as standard servers or in groups of such servers. It can also be implemented as part of a rack server system or in a personal or portable computer. Alternatively, remote unit components may be combined with other components within a mobile device. Each of these components may contain one or more computers and, therefore, the platform 4 may consist of several computers which communicate with each other.

In an implementation, one or more software modules are tangibly embedded in a computing medium, which includes a computer or machine readable medium, such as internal memory, expansion memory, processor memory, or a transmitted signal that it can be received, for example, from the transceiver or from the external interface.

The device 3, the platform 4 and the unit 5 can communicate wirelessly via the communication interface, which can include, if necessary, digital signal processing circuits. The communication interface may include, among others, communications in various modes or protocols, such as GSM voice calls, SMS, EMS or MMS, CDMA, TDMA, PDC, WCDMA, CDMA2000 or GPRS. Such communication can occur, for example, via the radio frequency transceiver. Also, short-range communication may occur, for example when using a Bluetooth, Wi-Fi or other similar transceiver. In addition, the Global Positioning System (GPS) receiver module may provide additional wireless navigation or location data to the device, which can be conveniently used by applications running or executable on the device. Conveniently, the media use data encryption protocols to make data transmission more secure.

The infrastructure and method described herein may be implemented using different digital electronic circuits, integrated circuits, ASICs (i.e. "application specific integrated circuit") hardware, firmware, software, and/or combinations thereof. These different implementations may include the implementation in one or more computer programs, executable and/or interpretable on a programmable system, which includes at least one programmable processor, which may be dedicated or general, connected to receive data and instructions and to transmit data and instructions on a storage system, and provided with at least one input device and at least one output device.

These computer programs (also known as programs, software, software applications, or code) include machine instructions for a programmable processor and may be implemented in a high-level procedural and/or object-oriented programming language, and/or assembly language or machine language.

"Machine-readable medium" or "computer-readable medium" herein means any computer product, apparatus, and/or medium (e.g., magnetic disks, optical disks, memory, programmable logic devices) used to deliver machine instructions and /or data to a programmable processor, including a medium which is machine readable and which receives machine instructions in the form of machine readable signals. The term "machine readable signal" refers to any signal used to provide data and/or machine instructions to a programmable processor.

To interact with the user 30, the device 3, the platform 4 and/or the unit 5 can be provided with a viewer (e.g. a cathode ray tube) or an LCD monitor (liquid crystal display) to show the information to the user 30 and a keyboard and a pointer (eg a mouse or a trackball) with which the user 30 can supply information to the device itself. Other types of means can be used to interact with the user; for example, responses provided to user 30 may be in any form of sensory feedback (e.g., graphical, auditory and/or tactile feedback) and input from user 30 may be received in any form, including input acoustic, vocal or tactile.

The infrastructure may also include any computer system that includes a back-end component (e.g. a data server) or a middleware component (e.g. an application server) or a front-end component (e.g. a server). a client computer, equipped with a graphical user interface or a web browser through which a user 30 can interact) or any combination of such back end, middleware or front end components. System components can be interconnected by any form or medium of digital data communication (e.g. a communications network). Examples of communication networks include a local area network ("LAN"), a large area network ("WAN"), and the Internet.

Preferably, in the infrastructure 2 according to the invention the device 3 and the unit 5 act as clients while the platform 4 acts as a server. Conveniently, the clients and the server are generally far from each other and generally interact via a communication network and, preferably, always and only interact via the Internet network. The relationship between client and server is implemented by means of suitable computer programs running on their respective processors and having client-server relationships with each other.

Advantageously, the infrastructure 2 according to the invention may implement a modular architecture that allows for optimized resource management and efficient scalability. In particular, the online intermediation platform is designed to support seamless integration with the unit providing the automatic trading robot, using standardized and secure communication protocols. This configuration allows for centralized management of trading operations, reducing system complexity and improving overall security.

Preferably, the communication between the online intermediation platform 4 and the unit 5 providing the automatic trading robot is implemented via a dedicated communication protocol, configured to ensure optimized transmission of critical data in real time. The infrastructure 2 may also employ end-to-end encryption technology to protect the integrity and confidentiality of the API keys transmitted between the platform 4 and the provider unit 5. Furthermore, an authenticated handshake mechanism may also be provided to establish a secure and authorized connection, improving protection against unauthorized access.

Preferably, the APIs of the online intermediation platform 4 are implemented as REST APIs with OAuth authentication or as WebSocket APIs to ensure low-latency two-way communication. The system may also integrate a caching mechanism to reduce the number of repeated requests and improve data transfer efficiency. Furthermore, to ensure scalability, the platform 4 may implement a load balancer system to handle a large number of concurrent requests without compromising operational performance.

Preferably, API keys used to access automated trading services are configured with granular permissions, allowing to limit the trades available for each trading robot 6 based on predefined permissions. Additionally, API keys with a scheduled expiration or an automatic credential rotation mechanism may be used, reducing the risk of security compromise and preventing unauthorized access.

Preferably, the automatic trading robot 6 may be provided with a built-in backtesting engine that allows simulating the application of trading strategies on historical market data prior to actual execution. Preferably, the infrastructure 2 may also employ a predictive analytics system based on machine learning algorithms to dynamically adapt the parameters of trading strategies based on emerging market trends.

Preferably, the automatic trading robot 6 is organized into isolated software modules, each dedicated to a specific trading strategy. This configuration allows for multiple strategies to be run in parallel and individual modules to be updated without disrupting the overall operation of the system. The robot 6 can also implement a concurrent execution mechanism, optimizing strategy processing and ensuring reduced response times.

Preferably, the automatic trading robot 6 is programmed to monitor market volatility in real time and automatically activate or deactivate certain trading strategies based on predefined thresholds. In addition, it can also be configured to analyze time series of market data and predict price fluctuations through advanced quantitative models, allowing for more efficient order execution.

Preferably, the infrastructure 2 according to the invention can be configured to transmit data through an encrypted protocol, such as TLS 1.3, ensuring advanced protection of the information exchanged between the device of the user and the platform. This aspect reduces the risk of data interception and ensures that trading operations take place in a protected environment, minimizing the possibility of cyber-attacks. Furthermore, the infrastructure 2 can support multi-factor authentication (MFA) mechanisms to prevent unauthorized access, further improving the security of the system.

### TECHNICAL ADVANTAGES

The configuration of the infrastructure 2 according to the invention allows a direct interaction between the intermediation platform 4 and the unit 5 providing the robot 6, eliminating the need for the user to perform manual operations for the integration of the robot with the platform. The absence of a manual configuration reduces the risk of errors and improves the reliability of the system, ensuring a safer and more efficient execution of trading operations. The automation of the connection between the platform 4 and the unit 5 providing the robot 6 also eliminates the direct management of access credentials by the user, limiting exposure to possible cyber-attacks and improving the protection of sensitive data.

Advantageously, the communication between the intermediation platform 4 and the unit 5 providing the trading robot 6 occurs directly through first means of communication 7, thus allowing the transfer of data without intermediaries. This approach allows to optimize the latency times between the generation of the trading signal and its execution, ensuring a greater responsiveness of the system compared to traditional solutions in which the signal must be processed through multiple transmission levels. The direct communication between these components of the infrastructure also allows a reduction of the computational load on the platform 4, improving the overall scalability of the infrastructure. The management of the data flow through direct communication between the platform 4 and the unit 5 providing the trading robot 6 ensures that the automatic trading operations are performed without delays due to redundant checks or repeated authentication processes.

Preferably, the interface data and/or programs 10 include APIs of the online intermediation platform, which ensure a standardized and secure integration between the different elements of the infrastructure. The APIs allow to define a structured protocol for accessing the functionalities of the platform, avoiding the need for the user to manually interact with the system to authorize the operations of the trading robot 6. The use of an API-based architecture ensures that the platform can efficiently manage a large number of simultaneous connections, reducing the need for manual intervention and improving the fluidity of the order execution process. The implementation of APIs also allows to reduce the risk of human errors related to the insertion of incorrect credentials or parameters, ensuring greater reliability in the execution of automatic trading strategies.

Preferably, the interface data and/or programs 10 comprise at least one API key authentication code required to access the APIs of the online intermediation platform 4, allowing data retrieval and execution of trading operations in a secure and controlled manner. The use of dedicated API keys for each user or for each trading robot allows for precise tracking of the operations performed and for limiting access to authorized subjects only. The solution may also provide for the use of API keys with temporary validity or mechanisms for periodically updating credentials, improving security and preventing any attacks resulting from the illicit acquisition of access keys. The use of different API keys for each trading robot 6 allows for segmenting authorizations, ensuring that each robot can only operate within the limits defined by the platform without interfering with other operations.

Preferably, the automatic trading robot 6 is configured to generate and send signals representing trading operations according to a PAC or DCA accumulation plan subscribed by the user by accessing the platform 4 via the device 3. The automation of trading operations according to a pre-established plan eliminates the need for the user to manually intervene in the management of purchase and sale operations, ensuring greater consistency in the application of the investment strategy. The system ensures that operations are executed with a predetermined logic, regardless of short-term market fluctuations, preventing the user from making impulsive decisions and improving the management of the risk associated with investments. The integration of this functionality into the intermediation platform also allows for a reduction in the processing times of operations, improving the efficiency of order management.

Preferably, the automatic trading robot 6 is programmed to operate according to at least two, and more preferably three, predefined trading strategies, which allow dynamically adapting the trading to market conditions. The adoption of multiple strategies allows to diversify the operations and improve the overall stability of the investment portfolio, reducing the negative impact of sudden market changes. The automated selection of the most suitable strategy based on the current conditions ensures more efficient trading, reducing the need for the user to constantly monitor the market trend and manually change the trading strategy.

Preferably, the automatic trading robot 6 comprises a first software module configured to generate signals representing trading operations based on the first predefined strategy, a second software module dedicated to the second predefined strategy and a third software module associated with the third predefined strategy. The division of the software into distinct modules improves the scalability of the system and facilitates the maintenance and updating of trading strategies. The adoption of a modular structure also allows for the isolation of any malfunctions of a module without compromising the entire system, ensuring greater operational reliability.

Preferably, the automatic trading robot 6 is programmed to enable or disable the first predefined strategy based on the market trend. The ability to automatically adapt to market conditions allows you to optimize your trading operations, reducing the risk of losses due to sudden changes in market dynamics. The ability to analyze market data in real time and automatically change the parameters of operations ensures greater system responsiveness compared to solutions where such changes must be made manually by the user.

Advantageously, the method according to the invention, for online trading of transferable securities, optimizes the execution of operations by automating the interaction between an online intermediation platform and a unit providing an automatic trading robot, eliminating the need for manual intervention by the user. The platform 4 proposes a PAC or DCA accumulation plan and, following subscription by the user via his device 3, directly transmits interface data and/or programs 10 to the provider unit 5, allowing the robot 6 to operate automatically on the platform and/or by interfacing with it. The direct integration between the platform 4 and the provider unit 5 eliminates intermediate steps and reduces the risk of configuration errors, improving operational efficiency and the security of credential transmission. The provider unit 5 generates the trading robot 6 based on the data received from the platform 4, ensuring that the operations are executed in accordance with the predefined parameters without requiring manual configurations by the user. Centralized authentication and configuration management ensures that the user does not have to interact with multiple systems, simplifying the use of the service and reducing the risk of exposing sensitive credentials. The absence of latency due to redundant checks and optimized data transmission allow for improved system responsiveness and more accurate execution of trading orders compared to traditional solutions, making the process more secure, scalable and efficient.

The present invention has been illustrated and described in some of its preferred embodiments, but it is understood that executive variants can be applied to them in practice, without however departing from the scope of protection of the present patent for industrial invention.

## Claims

1. IT infrastructure (2) for online trading of transferable securities, preferably crypto-assets and/or other transferable securities, **characterized by** comprising:
- at least one device (3) managed by a corresponding user (30),
- an online intermediation platform (4),
- a unit (5) supplying at least one automatic trading robot (6),
and by comprising:
- first means of communication (7) between the online intermediation platform (4) and the unit (5), to thus allow data communication between the platform (4) and the unit (5) in a direct way,
- second means of communication (8) of the device (3) with the online intermediation platform (4), to thus allow the user (30) of the device (3) to access and/or interface with the online intermediation platform (4).
and by the fact that said online intermediation platform (4) is configured to communicate directly to the unit (5) data and/or interface programs (10) so that said unit (5) supplies a robot (6) capable of carrying out automated trading operations through said platform (4) and/or by interfacing with said platform (4).

2. Infrastructure according to claim 1, **characterized in that** the interface data and/or programs (10) comprise APIs (*application program interfaces)* of the online intermediation platform (4).

3. Infrastructure according to one or more of the preceding claims, **characterized in that** the interface data and/or programs (10) include at least one API key authentication code which is required in order to be able to access the APIs of the online intermediation platform (4) , in order to exchange and/or retrieve data through the APIs of the online intermediation platform (4) and/or in general in order to perform the actions available through the APIs of the online intermediation platform (4).

4. Infrastructure according to one or more of the preceding claims, **characterized in that** the automatic trading robot (6) is configured to generate and send signals (11) representative of trading operations to be carried out according to a "dollar cost averaging" (DCA) capital accumulation plan which has been subscribed by the user (30) by accessing the platform 4 using the device (3).

5. Infrastructure according to one or more of the preceding claims, **characterized in that** the automatic trading robot (6) is programmed so as to carry out trading operations according to at least two, preferably three, predefined trading strategies which are different from each other.

6. Infrastructure according to one or more of the preceding claims, **characterized in that** the automatic trading robot (6) is programmed to carry out trading operations according to:
- a first predefined trading strategy which is configured to purchase two or more assets so that they are balanced with each other within the portfolio,
- a second predefined trading strategy which is configured to check the differences between the assets and, if they exceed a certain threshold value, to carry out asset buying and selling operations in order to decrease these differences, thus rebalancing the investments in the various assets within of the wallet.
- a third predefined trading strategy which is configured to trade assets based on the market trend.

7. Infrastructure according to the previous claim, **characterized in that** the automatic trading robot (6) comprises:
- a first software module which is programmed to generate, on the basis of the first predefined trading strategy, corresponding signals (11) representative of trading operations to be carried out,
- a second software module which is programmed to generate, on the basis of the second predefined trading strategy, corresponding signals (11) representative of trading operations to be carried out,
- a third software module which is programmed to generate, on the basis of the third predefined trading strategy, corresponding signals (11) representative of trading operations to be carried out,
and by the fact that:
- the first software module is executed in correspondence with the periodic capital payment which is carried out with the periodicity associated with the "dollar cost averaging" (DCA) capital accumulation plan subscribed by the user (30) by accessing the platform (4) via the device (3).
- the second software module is executed in correspondence with the periodic capital payment which is carried out with the periodicity associated with the "dollar cost averaging" (DCA) capital accumulation plan subscribed by the user (30) by accessing the platform (4) using the device (3) and/ o is executed at a pre-set frequency, preferably daily,
- the third software module is executed at a preset frequency, preferably daily.

8. Infrastructure according to one or more of claims 6 or 7, **characterized in that** the robot (6) is programmed so that, on the basis of the market trend, it enables or disables said first predefined trading strategy.

9. Infrastructure according to one or more of the previous claims, wherein an API key code is provided for each robot (6) generated by the unit (5) and/or for each unit (5) and/or for each account (40) of the platform (4), thus allowing the APIs of the platform (4) to identify the origin of the connection with the platform (4).

10. Infrastructure according to one or more of the preceding claims, wherein the interface data and/or programs (10) comprise a unique identification code for each user (30) and, preferably, for each account (40) created within the platform (4).

11. Infrastructure according to one or more of the preceding claims, wherein:
- the robot (6) is implemented at a further unit which is different from the one that manages the unit (5), and
- the device (3) managed by the user (30) interfaces and communicates always and only with the online intermediation platform (4).

12. Method, which is implemented using processors/computers, for online trading of transferable securities, preferably crypto-assets and/or other transferable securities **characterized by** the fact that:
- an online intermediation platform (4) offers users an investment method according to a "dollar cost averaging" (DCA) capital accumulation plan,
- at least one user (30) subscribes, by means of a device (3), to the a "dollar cost averaging" (DCA) capital accumulation plan proposed by said platform (4),
- said online intermediation platform (4) directly sends data and/or interface programs (10) to unit (5) supplying an automatic trading robot (6) in order to be able to carry out trading operations through said platform (4) and/or by interfacing with said platform (4),
- the unit (5) supplies, on the basis of the data and/or interface programs (10) thus received directly from the online intermediation platform (4), at least one robot (6) capable of carrying out automatic trading operations in/through said platform (4) and/or interfacing with said platform (4) according to said "dollar cost averaging" (DCA) capital accumulation plan which has been subscribed by the user (30).

13. Method according to the previous claim, **characterized in that** the user (30) creates an account (40) only within the online intermediation platform (4), thus not requiring any action from the user to register on the unit (5).

14. Method according to claim 12 or 13, wherein the unit (5) automatically associates to said at least one robot (6) an identification code which is different for each user (30).

15. Method according to one or more of claims 12 to 14, wherein the unit (5) is distinct and separate from the online intermediation platform (4) and wherein the verification and/or association of the user's data (30) in unit (5) in order to configure the robot (6) and/or in order to allow the operation of the robot (6) is integrated, preferably embedded, in the platform (4).
